# EUROPEAN PATENT APPLICATION

(11) **EP 3 591 356 A1**
(43) Date of publication of application: **08.01.2020**
(21) Application number: 18761748.5
(22) Date of filing: 05.02.2018
(51) Int. Cl.: G01J 1/04, G01J 1/02

(54) **LIGHT DETECTOR**

(30) Priority: 01.03.2017 JP 2017038605
(71) Applicant: Hamamatsu Photonics K.K., Hamamatsu-shi, Shizuoka 435-8558 (JP)
(72) Inventor: KASAMORI Kohei, Hamamatsu-shi Shizuoka 435-8558 (JP); YAMAZAKI Masahiro, Hamamatsu-shi Shizuoka 435-8558 (JP); SHIBAYAMA Katsumi, Hamamatsu-shi Shizuoka 435-8558 (JP)
(74) Representative: Hoffmann Eitle
(86) International application number: PCT/JP2018/003833
(87) International publication number: WO 2018/159227

(57) **Abstract**

A light detector includes: a support substrate; a light transmission substrate which forms an accommodation space along with the support substrate; a light detection element which is located in the accommodation space and includes a bolometer layer; a first base layer which includes a first corner portion; a second base layer which includes a second corner portion; a solder layer which is disposed between the first base layer and the second base layer, fixes the support substrate and the light transmission substrate to each other, and air-tightly seals the accommodation space; and a reinforcement portion which is integrally formed with the solder layer by the same material as that of the solder layer, in which the reinforcement portion reaches at least one of the first surface side and the second surface side inside the first corner portion and the second corner portion.

## Description

### Technical Field

An aspect of the invention relates to a light detector which includes a light detection element such as a microbolometer.

### Background Art

There is known a light detector including a support substrate and a light transmission substrate which form an accommodation space, a light detection element which is a microbolometer or the like provided on the support substrate so as to be located in the accommodation space, and a solder layer which fixes the support substrate and the light transmission substrate to each other and air-tightly seals the accommodation space (for example, see Patent Literature 1).

### Citation List

### Patent Literature

Patent Literature 1: Japanese Unexamined Patent Publication No. 2013-543268

### Summary of Invention

### Technical Problem

In the above-described light detector, a method of increasing light transmittance by thinning the light transmission substrate or thermally isolating the light detection element from the outside by increasing a vacuum degree of the accommodation space is considered in order to improve light detection sensitivity. However, when the light transmission substrate is thinned, the light transmission substrate is easily deformed. For that reason, since a load is applied to the light transmission substrate or a joint portion between the solder layer and the light transmission substrate to be broken due to external stress or a pressure difference between the inside and the outside of the accommodation space when the vacuum degree of the accommodation space is increased, there is concern that the air-tightness of the accommodation space may be damaged.

Therefore, an aspect of the invention is to provide a light detector capable of improving light detection sensitivity and suppressing package breakage.

### Solution to Problem

A light detector according to an aspect of the invention includes: a support substrate; a light transmission substrate which is disposed on the support substrate and forms an accommodation space along with the support substrate; a light detection element which is provided on the support substrate so as to be located in the accommodation space and includes a bolometer layer whose electrical resistance changes in response to heat generated when light is incident through the light transmission substrate; a first base layer which is provided on a first surface on the side of the light transmission substrate in the support substrate so as to surround the light detection element when viewed from a thickness direction of the support substrate; a second base layer which is provided on a second surface on the side of the support substrate in the light transmission substrate so as to surround the light detection element and overlap the first base layer when viewed from the thickness direction of the support substrate; a solder layer which is disposed between the first base layer and the second base layer, fixes the support substrate and the light transmission substrate to each other, and air-tightly seals the accommodation space; and a reinforcement portion which is integrally formed with the solder layer by the same material as that of the solder layer, in which the first base layer includes a first corner portion, in which the second base layer includes a second corner portion which overlaps the first corner portion when viewed from the thickness direction of the support substrate, and in which the reinforcement portion reaches at least one of the first surface side and the second surface side inside the first corner portion and the second corner portion overlapping each other when viewed from the thickness direction of the support substrate.

In the light detector, the reinforcement portion which is integrally formed with the solder layer reaches at least one of the first surface side of the support substrate and the second surface side of the light transmission substrate inside the first corner portion of the first base layer and the second corner portion of the second base layer. Accordingly, it is possible to suppress the package breakage due to a load applied to the light transmission substrate or the joint portion between the solder layer and the light transmission substrate even when the vacuum degree of the accommodation space is increased while thinning the light transmission substrate in order to improve the light detection sensitivity. Thus, according to the light detector, it is possible to improve the light detection sensitivity and to suppress the package breakage.

The light detector according to an aspect of the invention may include a plurality of the light detection elements and the plurality of light detection elements may be arranged in a two-dimensional matrix shape. In this configuration, as compared with a case in which one light detection element is provided, the support substrate and the light transmission substrate increase in size and the light transmission substrate is easily deformed due to a pressure difference between the inside and the outside of the accommodation space. For that reason, it is particularly important that the reinforcement portion integrally formed with the solder layer reaches at least one of the first surface side of the support substrate and the second surface side of the light transmission substrate inside the first corner portion of the first base layer and the second corner portion of the second base layer.

In the light detector according to an aspect of the invention, the reinforcement portion may reach at least the second surface side. According to this configuration, since the joint portion between the solder layer and the light transmission substrate is reinforced by the reinforcement portion, it is possible to more reliably suppress the package breakage.

In the light detector according to an aspect of the invention, the first base layer may include a pair of the first corner portions which face each other with the accommodation space interposed therebetween when viewed from the thickness direction of the support substrate, the second base layer may include a pair of the second corner portions which respectively overlap the pair of first corner portions when viewed from the thickness direction of the support substrate, and the reinforcement portion may be disposed at each of a position inside one first corner portion and one second corner portion overlapping each other when viewed from the thickness direction of the support substrate and a position inside the other first corner portion and the other second corner portion overlapping each other when viewed from the thickness direction of the support substrate. According to this configuration, it is possible to reinforce the light transmission substrate with a good balance while suppressing an increase in the number of the reinforcement portions.

In the light detector according to an aspect of the invention, an inner edge of the reinforcement portion may be curved in a concave shape when viewed from the thickness direction of the support substrate. According to this configuration, since a range of forming the reinforcement portion is controlled, it is possible to suppress a decrease in opening ratio (a ratio which is occupied by a light transmission region in the light transmission substrate when viewed from the thickness direction of the support substrate) of the light transmission substrate and to suppress an individual difference in the vacuum degree of the accommodation space and the reinforcement degree of the light transmission substrate.

The light detector according to an aspect of the invention may further include: a guide portion which is provided in at least one of the first surface and the second surface so as to be located between the light detection element and the first and second corner portions overlapping each other when viewed from the thickness direction of the support substrate, wettability of the guide portion with respect to a material forming the reinforcement portion may be higher than wettability of the support substrate and the light transmission substrate with respect to the material forming the reinforcement portion, and the reinforcement portion may reach the guide portion. According to this configuration, since a range of forming the reinforcement portion is controlled, it is possible to suppress a decrease in opening ratio of the light transmission substrate and to suppress an individual difference in the vacuum degree of the accommodation space and the reinforcement degree of the light transmission substrate.

In the light detector according to an aspect of the invention, a groove may be formed on at least one of the first surface and the second surface so as to pass between the light detection element and the first and second corner portions overlapping each other when viewed from the thickness direction of the support substrate. According to this configuration, since a range of forming the reinforcement portion is controlled, it is possible to suppress a decrease in opening ratio of the light transmission substrate and to suppress an individual difference in the vacuum degree of the accommodation space and the reinforcement degree of the light transmission substrate.

In the light detector according to an aspect of the invention, the light transmission substrate may be provided with a concave portion which forms a part of the accommodation space and the reinforcement portion may reach the inside of the concave portion. According to this configuration, it is possible to increase the light transmittance of the light transmission substrate by thinning a region through which light is transmitted in the light transmission substrate. Further, it is possible to reinforce a region through which light is transmitted in the light transmission substrate.

### Advantageous Effects of Invention

According to an aspect of the invention, it is possible to provide a light detector capable of improving light detection sensitivity and suppressing package breakage.

### Brief Description of Drawings

FIG. 1 is a plan view of a light detector of a first embodiment.
FIG. 2 is a cross-sectional view taken along line II-II illustrated in FIG. 1.
FIG. 3 is a plan view of a pixel portion of the light detector illustrated in FIG. 1.
FIG. 4 is a perspective view of a light detection element of the pixel portion illustrated in FIG. 3.
FIG. 5 is a plan view of the light detection element illustrated in FIG. 4.
FIG. 6 is a cross-sectional view of the light detection element illustrated in FIG. 4.
FIG. 7 is a view illustrating a principle of an optical resonant structure of the light detection element illustrated in FIG. 4.
FIG. 8 is a cross-sectional view taken along line VIII-VIII illustrated in FIG. 1.
FIG. 9 is a bottom view of a part of the light detector illustrated in FIG. 1.
FIG. 10 is a cross-sectional view of a part of a light detector of a second embodiment.
FIG. 11 is a bottom view of a part of the light detector illustrated in FIG. 10.
FIG. 12 is a bottom view of a part of a light detector of a third embodiment.

### Description of Embodiments

Hereinafter, embodiments of the invention will be described in detail with reference to the drawings. Furthermore, in the drawings, the same or equivalent parts will be denoted by the same reference numerals and a redundant description thereof will be omitted.

### [First Embodiment]

### [Configuration of Light Detector]

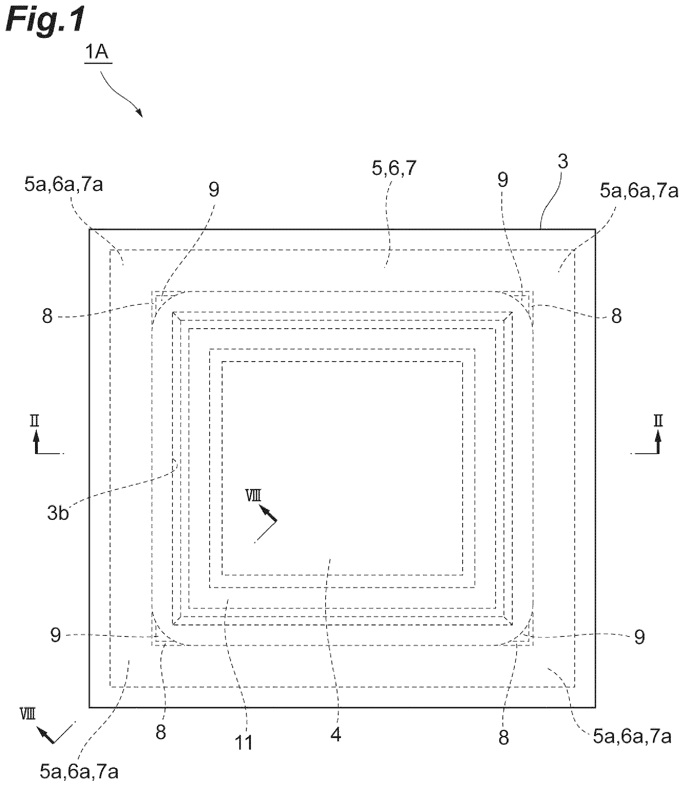

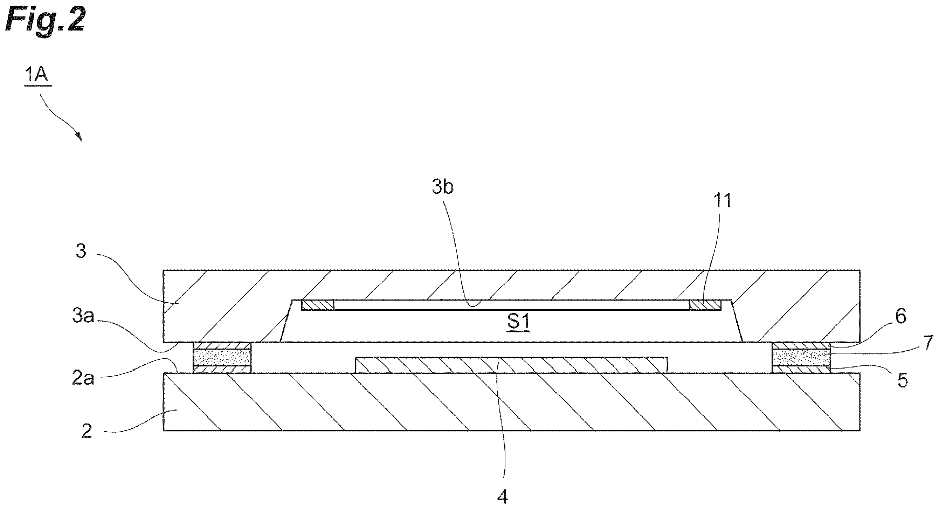

A light detector 1A illustrated in FIGS. 1 and 2 is a thermal type light detector that detects light (for example, infrared light) by the function as a bolometer and is used for an infrared imager, a thermography, and the like. As illustrated in FIGS. 1 and 2, the light detector 1A includes a support substrate 2, a light transmission substrate 3, a pixel portion 4, a first base layer 5, a second base layer 6, a solder layer 7, a reinforcement portion 8, a guide portion 9, and a getter 11.

The support substrate 2 is, for example, a rectangular plate-shaped Si substrate having an outer shape of about (several mm to dozens of mm) × (several mm to dozens of mm) and a thickness of about several hundreds of µm. A signal processing circuit unit (not illustrated) is formed within the support substrate 2. The signal processing circuit unit is electrically connected to the pixel portion 4. Furthermore, the signal processing circuit unit may be formed on the support substrate 2.

The light transmission substrate 3 is disposed on the support substrate 2 so as to overlap the support substrate 2 when viewed from the thickness direction of the support substrate 2 (that is, a direction perpendicular to a first surface 2a of the support substrate 2). The light transmission substrate 3 is, for example, a rectangular plate-shaped Si substrate having an outer shape of about (several mm to dozens of mm) × (several mm to dozens of mm) and a thickness of about several hundreds of µm. The light transmission substrate 3 allows light (for example, infrared light) to be transmitted therethrough. The light transmission substrate 3 forms an accommodation space S1 along with the support substrate 2. That is, the light transmission substrate 3 and the support substrate 2 constitute a package having the accommodation space S 1 formed therein.

A second surface 3a on the side of the support substrate 2 in the light transmission substrate 3 is provided with a concave portion 3b. The concave portion 3b is formed in a truncated quadrangular pyramid shape, for example, by dry etching or wet etching. The depth of the concave portion 3b is, for example, about a dozen of µm to several hundreds of µm. The concave portion 3b constitutes a part of the accommodation space S1.

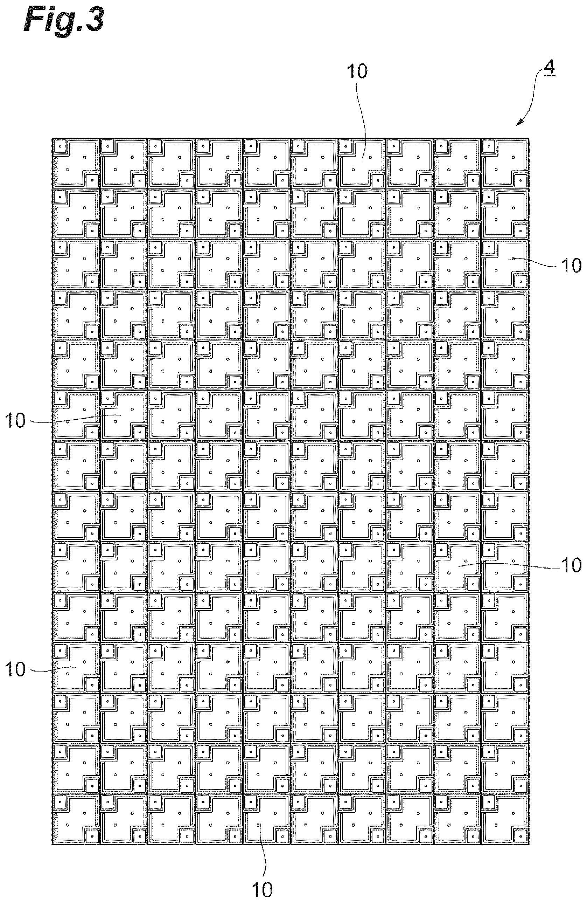

The pixel portion 4 is provided on the first surface 2a on the side of the light transmission substrate 3 in the support substrate 2 so as to be located in the accommodation space S1. The pixel portion 4 is included in the concave portion 3b when viewed from the thickness direction of the support substrate 2. The pixel portion 4 has, for example, an outer shape of about (dozens of µm to dozens of mm) × (dozens of µm to dozens of mm). The pixel portion 4 includes a plurality of light detection elements 10 (see FIG. 3) which are arranged in a two-dimensional matrix shape along the first surface 2a. Each light detection element 10 includes a bolometer layer whose electrical resistance changes in response to heat generated when light is incident through the light transmission substrate 3.

The first base layer 5 is provided on the first surface 2a of the support substrate 2 so as to surround the pixel portion 4 when viewed from the thickness direction of the support substrate 2. The first base layer 5 is formed in, for example, a rectangular ring shape and includes four first corner portions 5a. An inner edge of the first base layer 5 of each first corner portion 5a becomes a corner when viewed from the thickness direction of the support substrate 2.

The second base layer 6 is provided on the second surface 3a of the light transmission substrate 3 so as to surround the pixel portion 4 and to overlap the first base layer 5 when viewed from the thickness direction of the support substrate 2. The second base layer 6 is formed in, for example, a rectangular ring shape and includes four second corner portions 6a. Four second corner portions 6a respectively overlap four first corner portions 5a when viewed from the thickness direction of the support substrate 2. An inner edge of the second base layer 6 of each second corner portion 6a becomes a corner when viewed from the thickness direction of the support substrate 2.

The width of each of the first base layer 5 and the second base layer 6 is, for example, about dozens of µm to several hundreds of µm. The thickness of each of the first base layer 5 and the second base layer 6 is, for example, about dozens of nm to several µm. Each of the first base layer 5 and the second base layer 6 is a lamination film including at least one of, for example, Al, AlCu, AlSi, AlSiCu, AlSiTi, Ti, TiN, Cr, Ni, W, WSi₂, Pt, Pd, Au and Cu. Each of the first base layer 5 and the second base layer 6 may be a single layer film including at least one of, for example, the above-described materials.

The solder layer 7 is disposed between the first base layer 5 and the second base layer 6. The solder layer 7 fixes the support substrate 2 and the light transmission substrate 3 to each other and air-tightly seals the accommodation space S1 by eutectic bonding. The solder layer 7 is formed in a rectangular ring shape and includes four corner portions 7a. Four corner portions 7a respectively overlap four first corner portions 5a when viewed from the thickness direction of the support substrate 2.

The width of the solder layer 7 is, for example, about dozens of µm to several hundreds of µm. The thickness of the solder layer 7 is, for example, about several µm. The material of the solder layer 7 is, for example, Sn/Pb, Sn/Pb/Ag, Sn/Bi/Pb, Sn/Ag/Cu, Sn/Zn/Bi, Sn/Cu, Sn/Ag/Tn/Bi, Sn/Zn/Al, Ni/Sn, Au/Sn, Ag/Sn, Cu/Sn, Au/In, Cu/In, Ag/In, In, Al/Ge, Al/Zn, Bi/Ag, Sn/Sb, Sn/Ag, Sn/Zn, Sn/Bi, Sn/In, Au/Ga, Au/Si, Au/Ge, Au/Si, Al/Si, or Al/Cu/Ge. Furthermore, when the material of the solder layer 7 is Sn/Ag/Cu, Sn/Zn/Bi, or Sn/Cu, for example, Ni, Ge, Co, and Si may be added to the material.

The reinforcement portion 8 is disposed on the inside of the first corner portion 5a and the second corner portion 6a which overlap each other when viewed from the thickness direction of the support substrate 2. The guide portion 9 is disposed between the pixel portion 4 and the first and second corner portions 5a and 6a overlapping each other when viewed from the thickness direction of the support substrate 2. More specifically, the guide portion 9 is provided on the second surface 3a of the light transmission substrate 3 so as to located between the concave portion 3b and the first and second corner portions 5a and 6a overlapping each other when viewed from the thickness direction of the support substrate 2. The detail of the reinforcement portion 8 and the guide portion 9 will be described later.

The getter 11 is disposed in the accommodation space S1. More specifically, the getter 11 is provided on the bottom surface of the concave portion 3b so as to surround the pixel portion 4 when viewed from the thickness direction of the support substrate 2. The getter 11 is formed in, for example, a rectangular ring shape. The width of the getter 11 is, for example, about dozens of µm to several mm. The thickness of the getter 11 is, for example, about several µm. The getter 11 maintains the vacuum degree of the accommodation space S1 by absorbing a gas in the accommodation space S1. The getter 11 maintains, for example, a state in which the accommodation space S1 is depressurized to about several hundreds of mPa. The material of the getter 11 is, for example, an alloy including Zr (zirconium) as a main component.

### [Configuration of Light Detection Element]

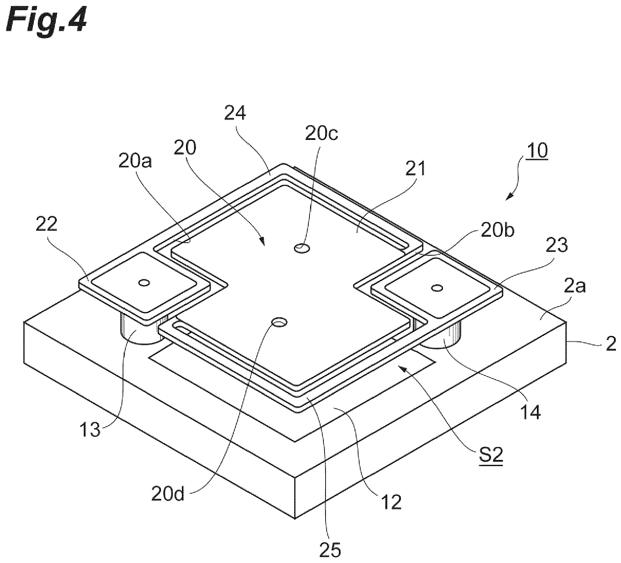

As illustrated in FIG. 3, the pixel portion 4 includes the plurality of light detection elements 10 which are arranged in a two-dimensional matrix shape. As illustrated in FIG. 4, each light detection element 10 includes the support substrate 2 (precisely, a part of the support substrate 2), a light reflection layer 12, a pair of electrode plugs 13 and 14, and a film body 20.

The light reflection layer 12 is formed on the first surface 2a of the support substrate 2. The light reflection layer 12 faces a light absorption layer 34 to be described later and constitutes an optical resonant structure along with the light absorption layer 34. The thickness of the light reflection layer 12 is, for example, about several hundreds of nm. The material of the light reflection layer 12 is, for example, a metal material having a high reflectance to light (for example, infrared light) such as Al.

The pair of electrode plugs 13 and 14 are formed on the first surface 2a of the support substrate 2. Each of the electrode plugs 13 and 14 is formed in, for example, a columnar shape. The height of each of the electrode plugs 13 and 14 is, for example, about several µm. The material of each of the electrode plugs 13 and 14 is, for example, a metal material such as Ti. The pair of electrode plugs 13 and 14 support the film body 20 on the first surface 2a of the support substrate 2 so that a gap S2 is formed between the first surface 2a of the support substrate 2 and the film body 20. The film body 20 is disposed so as to be substantially parallel to the first surface 2a of the support substrate 2. The distance between the film body 20 and the first surface 2a of the support substrate 2 is, for example, about several µm.

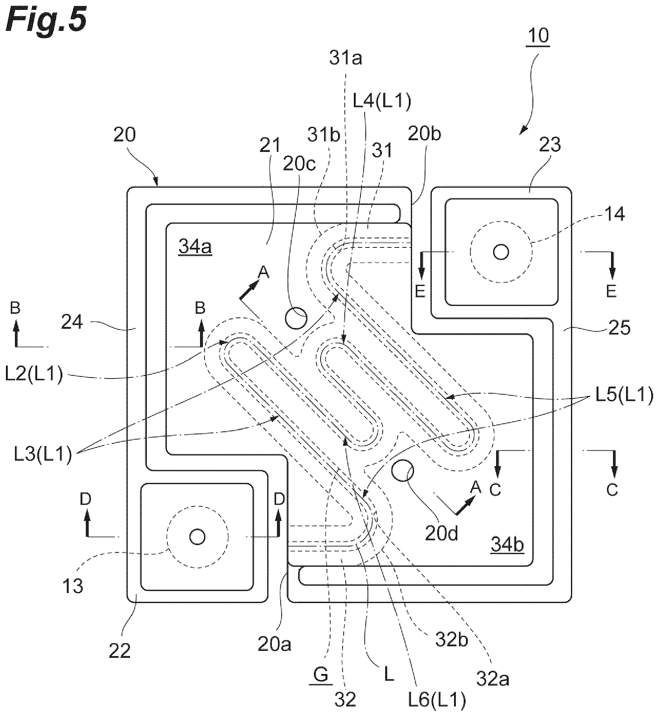

As illustrated in FIGS. 4 and 5, the film body 20 includes a light receiving portion 21, a pair of electrode portions 22 and 23, and a pair of beam portions 24 and 25. The light receiving portion 21 spreads so as to avoid each of the electrode plugs 13 and 14 when viewed from the thickness direction of the support substrate 2. The electrode portion 22 is disposed on the electrode plug 13. The electrode portion 23 is disposed on the electrode plug 14. The beam portion 24 is provided on one side of the light receiving portion 21 so as to extend along the outer edge of the light receiving portion 21. The beam portion 25 is provided on the other side of the light receiving portion 21 so as to extend along the outer edge of the light receiving portion 21. One end of the beam portion 24 is connected to the electrode portion 22 and the other end of the beam portion 24 is connected to the light receiving portion 21 at a position in the vicinity of the electrode portion 23. One end of the beam portion 25 is connected to the electrode portion 23 and the other end of the beam portion 25 is connected to the light receiving portion 21 at a position in the vicinity of the electrode portion 22. The film body 20 has, for example, a rectangular shape when viewed from the thickness direction of the support substrate 2. The pair of electrode portions 22 and 23 are respectively provided at diagonal sides of the film body 20.

The light receiving portion 21, the pair of electrode portions 22 and 23, and the pair of beam portions 24 and 25 are integrally formed. A slit 20a is formed to be a series between the light receiving portion 21 and the electrode portion 22 and between the light receiving portion 21 and the beam portion 24. A slit 20b is formed to be a series between the light receiving portion 21 and the electrode portion 23 and between the light receiving portion 21 and the beam portion 25. The width of each of the beam portions 24 and 25 is, for example, about several µm and the length of each of the beam portions 24 and 25 is, for example, about dozens to several hundreds of µm. The width of each of the slits 20a and 20b is, for example, about several µm.

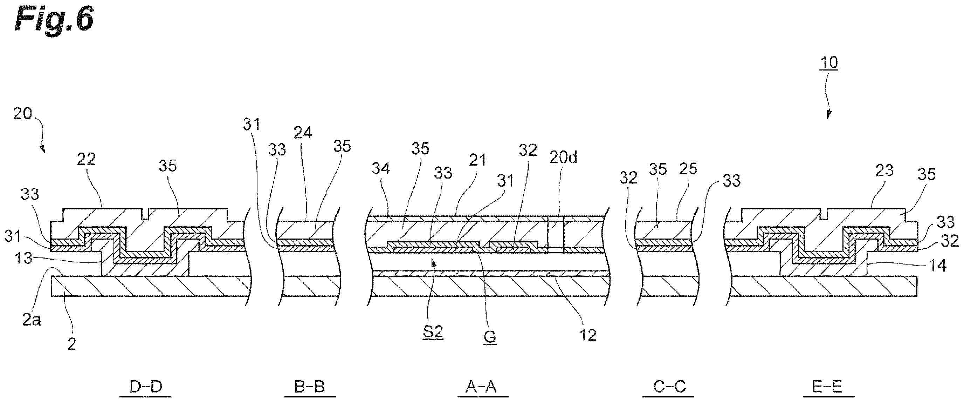

FIG. 6 is a cross-sectional view of the light detection element 10. A-A, B-B, C-C, D-D, and E-E of FIG. 6 are respectively cross-sectional views taken along lines A-A, B-B, C-C, D-D, and E-E of FIG. 5. As illustrated in FIG. 6, the film body 20 includes first and second wiring layers 31 and 32, a bolometer layer 33 corresponding to a resistance layer, the light absorption layer 34, and a separation layer 35.

As illustrated in FIGS. 5 and 6, the first wiring layer 31 and the second wiring layer 32 face each other with a gap G interposed therebetween in the light receiving portion 21 when viewed from the thickness direction of the support substrate 2. The gap G extends along a line L. The line L extends in a meandering manner so as to connect, for example, the electrode portion 22 and the electrode portion 23 when viewed from the thickness direction of the support substrate 2. Specifically, the line L includes a meandering portion L1. The meandering portion L1 includes a plurality of curved portions L2. The meandering portion L1 is formed in the light receiving portion 21 by repeating an operation of extending to one side of the light receiving portion 21, turning by, for example, 180° in the curved portion L2, extending to the other side of the light receiving portion 21, turning by, for example, 180° in the curved portion L2, and again extending to one side of the light receiving portion 21.

In the embodiment, one side means one side (for example, a side where the beam portion 24 exists) in a line connecting the electrode portion 22 and the electrode portion 23 when viewed from the thickness direction of the support substrate 2 and the other side means a side (for example, a side where the beam portion 25 exists) opposite to one side in a line connecting the electrode portion 22 and the electrode portion 23 when viewed from the thickness direction of the support substrate 2. Further, one side may be one side (for example, a side where the beam portion 24 exists) in a line passing through the center of the film body 20 when viewed from the thickness direction of the support substrate 2 and the other side may be a side (a side where the beam portion 25 exists) opposite to one side in a line passing through the center of the film body 20 when viewed from the thickness direction of the support substrate 2. That is, one side means the side of a first region 34a in the light absorption layer 34 and the other side means the side of a second region 34b in the light absorption layer 34.

The meandering portion L1 includes a first section L3, a second section L4, a third section L5, and a fourth section L6 when viewed from the thickness direction of the support substrate 2. The first section L3 swings to one side by a first swing amount. The second section L4 swings to one side by a second swing amount. The second section L4 is interposed between two first sections L3 in a direction along a line connecting the electrode portion 22 and the electrode portion 23 when viewed from the thickness direction of the support substrate 2. The third section L5 swings to the other side by the first swing amount. The fourth section L6 swings to the other side by the second swing amount. The fourth section L6 is interposed between two third sections L5 in a direction along a line connecting the electrode portion 22 and the electrode portion 23 when viewed from the thickness direction of the support substrate 2. The first swing amount is larger than a predetermined amount. The second swing amount is smaller than a predetermined amount. The first swing amount is, for example, about a dozen of µm. The second swing amount is, for example, about several µm.

Specifically, in the light receiving portion 21, the first section L3 extends to one side of the light receiving portion 21 by the first swing amount, turns by, for example, 180° in the curved portion L2, and extends to the other side of the light receiving portion 21 by the first swing amount. Subsequently, the fourth section L6 extends to the other side of the light receiving portion 21 by the second swing amount, turns by, for example, 180° in the curved portion L2, and extends to one side of the light receiving portion 21 by the second swing amount. Subsequently, the second section L4 extends to one side of the light receiving portion 21 by the second swing amount, turns by, for example, 180° in the curved portion L2, and extends to the other side of the light receiving portion 21 by the second swing amount. Subsequently, the third section L5 extends to the other side of the light receiving portion 21 by the first swing amount, turns by, for example, 180° in the curved portion L2, and extends to one side of the light receiving portion 21 by the first swing amount. The meandering portion L1 is formed by repeating these operations. Furthermore, each of the first section L3, the second section L4, the third section L5, and the fourth section L6 includes the curved portion L2.

The first wiring layer 31 and the second wiring layer 32 are formed in an elongated shape in a direction along the line L in the light receiving portion 21. That is, the lengths of the first wiring layer 31 and the second wiring layer 32 in a direction along the line L in the light receiving portion 21 are larger than the widths of the first wiring layer 31 and the second wiring layer 32 in a direction perpendicular to the line L when viewed from the thickness direction of the support substrate 2. The direction perpendicular to the line L means a direction perpendicular to a tangent line of each position of the line L when viewed from the thickness direction of the support substrate 2. The directions perpendicular to the line L at respective positions of the curved portion are different.

Specifically, the first wiring layer 31 includes a first edge portion 31a and a third edge portion 31b in the light receiving portion 21. Each of the first edge portion 31a and the third edge portion 31b extends along the line L when viewed from the thickness direction of the support substrate 2. The first edge portion 31a extends at a position on the side of the line L. The third edge portion 31b extends at a position on the side opposite to the line L. The second wiring layer 32 includes a second edge portion 32a and a fourth edge portion 32b in the light receiving portion 21. Each of the second edge portion 32a and the fourth edge portion 32b extends along the line L when viewed from the thickness direction of the support substrate 2. The second edge portion 32a extends at a position on the side of the line L. The fourth edge portion 32b extends at a position on the side opposite to the line L.

The first edge portion 31a and the second edge portion 32a face each other with the line L interposed therebetween when viewed from the thickness direction of the support substrate 2. That is, the gap G is defined by the first edge portion 31a and the second edge portion 32a when viewed from the thickness direction of the support substrate 2.

The first edge portion 31a on the side of the line L in the first wiring layer 31, the third edge portion 31b on the side opposite to the line L, the second edge portion 32a on the side of the line L in the second wiring layer 32, and the fourth edge portion 32b on the side opposite to the line L respectively continuously extend when viewed from the thickness direction of the support substrate 2. A case in which the edge portion continuously extends means that the edge portion is smoothly formed without the corner portion. That is, the continuously extending edge portion does not include a portion with an infinitesimal curvature radius. For example, the minimum value of the curvature radius of each of the first edge portion 31a, the second edge portion 32a, the third edge portion 31b, and the fourth edge portion 32b is larger than 0.01 µm.

The length of each of the first wiring layer 31 and the second wiring layer 32 in a direction along the line L in the light receiving portion 21 is, for example, about dozens to several hundreds of µm when viewed from the thickness direction of the support substrate 2. The width of each of the first wiring layer 31 and the second wiring layer 32 in a direction perpendicular to the line L is, for example, about several µm when viewed from the thickness direction of the support substrate 2. The width of the gap G in a direction perpendicular to the line L when viewed from the thickness direction of the support substrate 2 is, for example, about several µm. The thickness of each of the first wiring layer 31 and the second wiring layer 32 is, for example, about dozens to several hundreds of nm.

The first wiring layer 31 extends from the light receiving portion 21 to the electrode portion 22 through the beam portion 24. The first wiring layer 31 is formed on the electrode plug 13 in the electrode portion 22. The first wiring layer 31 is electrically connected to the electrode plug 13. The second wiring layer 32 extends from the light receiving portion 21 to the electrode portion 23 through the beam portion 25. The second wiring layer 32 is formed on the electrode plug 14 in the electrode portion 23. The second wiring layer 32 is electrically connected to the electrode plug 14. The material of each of the first wiring layer 31 and the second wiring layer 32 is, for example, a metal material such as Ti.

The bolometer layer 33 is formed in the light receiving portion 21 so as to cover the first wiring layer 31 and the second wiring layer 32 from the side opposite to the support substrate 2. The bolometer layer 33 is formed in the light receiving portion 21 so as to cover the surfaces opposite to the support substrate 2 in the first wiring layer 31 and the second wiring layer 32 and the side surfaces of the first wiring layer 31 and the second wiring layer 32. That is, the bolometer layer 33 is disposed in the gap G. The bolometer layer 33 is formed on the surfaces opposite to the support substrate 2 in the first wiring layer 31 and the second wiring layer 32 in the electrode portions 22 and 23 and the beam portions 24 and 25. The bolometer layer 33 is electrically connected to each of the first wiring layer 31 and the second wiring layer 32. The thickness of the bolometer layer 33 is, for example, about dozens to several hundreds of nm. The bolometer layer 33 has an electrical resistance depending on a temperature. The material of the bolometer layer 33 is, for example, a material such as amorphous silicon (a-Si) which has a large change in electrical resistivity due to a change in temperature.

The light absorption layer 34 faces the first surface 2a of the support substrate 2 in the light receiving portion 21. The light absorption layer 34 is disposed on the side opposite to the support substrate 2 with respect to the bolometer layer 33. The light absorption layer 34 spreads to the substantially entire region of the light receiving portion 21 when viewed from the thickness direction of the support substrate 2. The thickness of the light absorption layer 34 is, for example, about a dozen of nm. The material of the light absorption layer 34 is, for example, WSi₂ or Ti.

The separation layer 35 is disposed between each of the first wiring layer 31 and the light absorption layer 34, and the second wiring layer 32 and the absorption layer 34. Specifically, the separation layer 35 is formed on the surface opposite to the support substrate 2 in the bolometer layer 33 in the light receiving portion 21, the beam portions 24 and 25, and the electrode portions 22 and 23. Then, the light absorption layer 34 is formed on the surface opposite to the support substrate 2 of the separation layer 35 in the light receiving portion 21. The thickness of the separation layer 35 is, for example, about several hundreds of nm. The thickness of the separation layer 35 is larger than the thickness of each of the first wiring layer 31, the second wiring layer 32, the bolometer layer 33, and the light absorption layer 34. The material of the separation layer 35 is, for example, a silicon nitride film (SiN) or the like.

The light absorption layer 34 includes the first region 34a and the second region 34b when viewed from the thickness direction of the support substrate 2. The first region 34a spreads to the opposite side of the second wiring layer 32 with respect to the first wiring layer 31 when viewed from the thickness direction of the support substrate 2. The second region 34b spreads to the opposite side of the first wiring layer 31 with respect to the second wiring layer 32 when viewed from the thickness direction of the support substrate 2. The total area of the first wiring layer 31 and the second wiring layer 32 is smaller than the area of each of the first region 34a and the second region 34b when viewed from the thickness direction of the support substrate 2.

Furthermore, the first region 34a and the second region 34b of the light absorption layer 34 are formed on the bolometer layer 33 with the separation layer 35 interposed therebetween. Further, the bolometer layer 33 and the separation layer 35 are continuously formed throughout the first region 34a and the second region 34b.

The film body 20 is provided with through-holes 20c and 20d. The through-holes 20c and 20d are holes through which an etching gas for removing a sacrificial layer (not illustrated) passes. The through-holes 20c and 20d are formed on one side of the second section L4 when viewed from the thickness direction of the support substrate 2. Specifically, the through-hole 20c is located between two first sections L3 in the first region 34a. The through-hole 20d is located between two third sections L5 in the second region 34b. When viewed from the thickness direction of the support substrate 2, each of the through-holes 20c and 20d has a circular shape and the diameter is, for example, about several µm.

In the light detector 1A with the above-described configuration, light is detected as below. First, when light is transmitted through the light transmission substrate 3 and is incident to the light receiving portion 21, heat is generated in the light absorption layer 34 constituting the optical resonant structure to be described later. At this time, the light receiving portion 21 and the support substrate 2 are thermally separated from each other by the gap S2. Further, the light receiving portion 21 is thermally separated from the electrode portion 22 and the beam portion 24 by the slit 20a. Further, the light receiving portion 21 is thermally separated from the electrode portion 23 and the beam portion 25 by the slit 20b. For this reason, it is possible to prevent heat generated in the light absorption layer 34 from escaping to the support substrate 2 through the beam portions 24 and 25 and the electrode portions 22 and 23.

Heat generated in the light absorption layer 34 is transmitted to the bolometer layer 33 through the separation layer 35. Then, the bolometer layer 33 increases in temperature and decreases in electrical resistance due to this heat. Such a change in electrical resistance is transmitted as a signal to the signal processing circuit unit through the first and second wiring layers 31 and 32 and the electrode plugs 13 and 14 electrically connected to the bolometer layer 33. Then, in the signal processing circuit unit, a change in electrical resistance of the bolometer layer 33 is converted into a change in voltage or current and light is detected on the basis of a change in voltage or current.

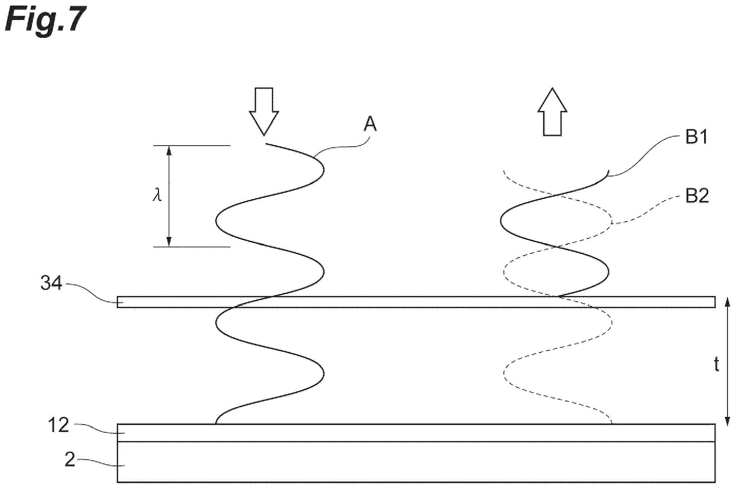

Next, the optical resonant structure will be described in detail. As illustrated in FIG. 7, in the incident light A (having a wavelength λ) which is incident to the light absorption layer 34, a part is reflected as the reflected light B1 by the light absorption layer 34 and the other part is transmitted through the light absorption layer 34. The other part of the incident light A transmitted through the light absorption layer 34 is reflected as the reflected light B2 by the light reflection layer 12. Then, the reflected light B1 and the reflected light B2 interfere with each other on the reflection surface of the light absorption layer 34 to be canceled. Accordingly, the incident light A is absorbed by the reflection surface of the light absorption layer 34. Heat is generated in the light absorption layer 34 by the energy of the absorbed incident light A.

The absorption rate of the incident light A is determined by the sheet resistance of the light absorption layer 34 and the optical distance t between the light absorption layer 34 and the light reflection layer 12. The thickness of the light absorption layer 34 is set to about 16 nm (when the material of the light absorption layer 34 is WSi₂) so that the sheet resistance becomes a vacuum impedance (377 Ω/sq). Accordingly, the amplitude of the reflected light B1 reflected by the light absorption layer 34 matches the amplitude of the reflected light B2 reflected by the light reflection layer 12. For this reason, the reflected light B1 and the reflected light B2 efficiently interfere with each other to be cancelled in the reflection surface of the light absorption layer 34. Thus, the absorption rate of the incident light A is improved.

Further, the optical distance t is set to be t = (2m - 1)λ/4 (m = 1, 2, 3, ...). Accordingly, the phases of the reflected light B1 and the reflected light B2 deviate from each other by 180°. For this reason, the reflected light B1 and the reflected light B2 efficiently interfere with each other to be cancelled in the reflection surface of the light absorption layer 34. Thus, the absorption rate of the incident light A is improved. In this way, the light reflection layer 12 constitutes the optical resonant structure with the light absorption layer 34. The incident light A is efficiently absorbed as an area of an overlapping portion between the light reflection layer 12 and the light absorption layer 34 when viewed from the thickness direction of the support substrate 2 becomes wider.

### [Configuration of Reinforcement Portion and Guide Portion]

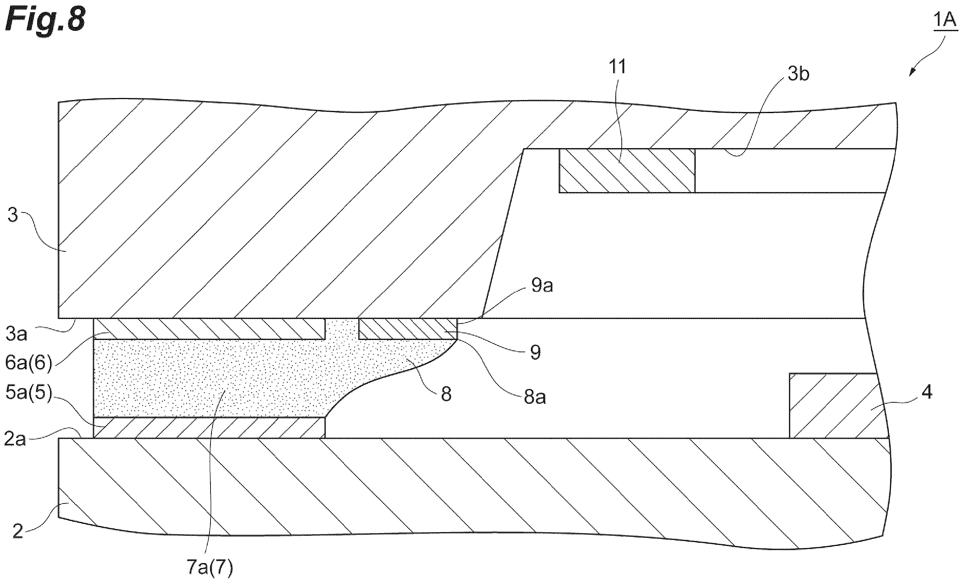

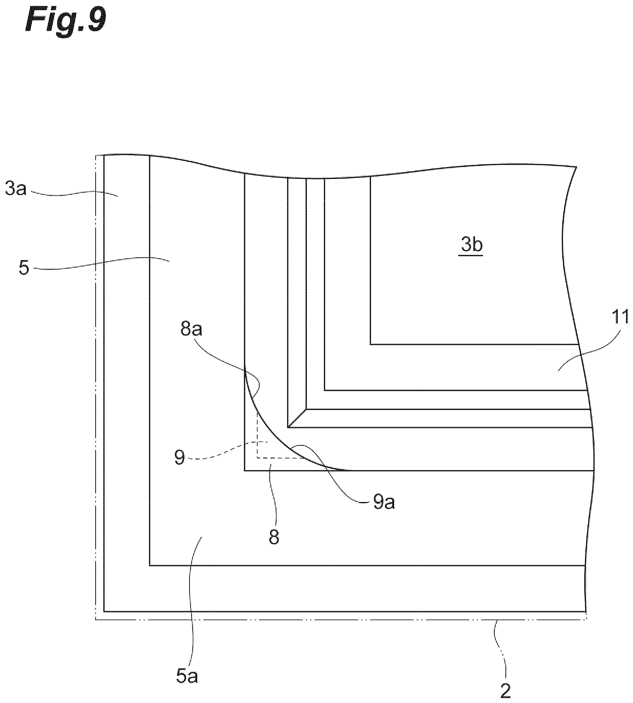

As illustrated in FIGS. 8 and 9, the reinforcement portion 8 is integrally formed with the solder layer 7 by the same material as that of the solder layer 7. The wettability of the guide portion 9 with respect to the material forming the reinforcement portion 8 is higher than the wettability of the support substrate 2 and the light transmission substrate 3 with respect to the material forming the reinforcement portion 8. The guide portion 9 is, for example, a lamination film including at least one of Al, AlCu, AlSi, AlSiCu, AlSiTi, Ti, TiN, Cr, Ni, W, WSi₂, Pt, Pd, Au, and Cu. The guide portion 9 may be, for example, a single layer film including any one of the above-described materials. The thickness of the guide portion 9 is, for example, about dozens of nm to several µm.

The guide portion 9 is formed on the second surface 3a of the light transmission substrate 3 so as to fill the inner corner of the second corner portion 6a of the second base layer 6. The guide portion 9 moves away from the second base layer 6 in the second surface 3a of the light transmission substrate 3. An inner edge 9a of the guide portion 9 is curved (smoothly curved) in a concave shape when viewed from the thickness direction of the support substrate 2.

The reinforcement portion 8 extends from the corner portion 7a of the solder layer 7 to the guide portion 9 and reaches the guide portion 9. That is, the reinforcement portion 8 reaches the second surface 3a of the light transmission substrate 3 inside the first corner portion 5a and the second corner portion 6a overlapping each other when viewed from the thickness direction of the support substrate 2. The reinforcement portion 8 engages with the inside of the second base layer 6. An inner edge 8a of the reinforcement portion 8 overlaps the inner edge 9a of the guide portion 9 when viewed from the thickness direction of the support substrate 2 and is curved (smoothly curved) in a concave shape.

Furthermore, a case in which the reinforcement portion 8 reaches the second surface 3a of the light transmission substrate 3 includes a "case in which the reinforcement portion 8 reaches a film, a layer, or the like (for example, the guide portion 9) formed on the second surface 3a inside the second corner portion 6a of the second base layer 6", a "case in which the reinforcement portion 8 reaches the second surface 3a (contacts the second surface 3a), for example, in a state where the second surface 3 a is not provided with a film, a layer, or the like inside the second corner portion 6a of the second base layer 6", and a "case in which the reinforcement portion 8 extends to the second surface 3a inside the second corner portion 6a of the second base layer 6".

The reinforcement portion 8 is disposed between the second corner portion 6a and the pixel portion 4 when viewed from the thickness direction of the support substrate 2. The reinforcement portion 8 is disposed between the second corner portion 6a and the getter 11 when viewed from the thickness direction of the support substrate 2. The reinforcement portion 8 is disposed between the second corner portion 6a and the concave portion 3b when viewed from the thickness direction of the support substrate 2. The thickness of the reinforcement portion 8 gradually decreases from the solder layer 7 toward the pixel portion 4.

When focusing on a pair of first corner portions 5a facing each other with the accommodation space S1 interposed therebetween when viewed from the thickness direction of the support substrate 2 and a pair of second corner portions 6a respectively overlapping the pair of first corner portions 5a when viewed from the thickness direction of the support substrate 2, the reinforcement portion 8 is disposed at each of a position inside one first corner portion 5a and one second corner portion 6a overlapping each other when viewed from the thickness direction of the support substrate 2 and a position inside the other first corner portion 5a and the other second corner portion 6a overlapping each other when viewed from the thickness direction of the support substrate 2.

### [Operation and Effect]

As described above, in the light detector 1A, the reinforcement portion 8 is integrally formed with the solder layer 7 and reaches the second surface 3a inside the first corner portion 5a and the second corner portion 6a. Accordingly, the joint portion between the solder layer 7 and the light transmission substrate 3 is reinforced by the reinforcement portion 8. Thus, the joint portion between the solder layer 7 and the light transmission substrate 3 is not easily broken even when the vacuum degree of the accommodation space S1 is increased while thinning the light transmission substrate 3 in order to improve the light detection sensitivity. Thus, according to the light detector 1A, it is possible to improve the light detection sensitivity and to suppress the package breakage.

Hereinafter, the suppression of the package breakage will be described in more detail. The solder layer 7 is, for example, heated and melted so as to fix the support substrate 2 and the light transmission substrate 3 to each other and to air-tightly seal the accommodation space S1. When heating the solder layer 7, each member constituting the light detector 1A expands and contracts and hence stress is generated in each member. Further, when the solder layer 7 reacts eutectically, the solder layer 7 also expands and contracts and hence stress is generated in the solder layer 7. When the width of the solder layer 7, the width of the first base layer 5, the width of the second base layer 6, and the like are widened, stress generated during the expansion and contraction thereof increases.

In the light detector 1A, since the solder layer 7 is swollen from the first corner portion 5a and the second corner portion 6a so as to form the reinforcement portion 8, stress generated in the solder layer 7 can be reduced. Furthermore, when stress generated in the solder layer 7 increases, a solder material may be blown into the accommodation space S1 so that the light detection element 10 may be contaminated. In the light detector 1A, such an accident can be also prevented.

Similarly, since the guide portion 9 is separated from the second base layer 6, the width of each of the second base layer 6 and the guide portion 9 is narrowed and hence stress generated in each of the second base layer 6 and the guide portion 9 during the expansion and contraction can be reduced. Furthermore, when the guide portion 9 is provided in the first surface 2a, the width of each of the first base layer 5 and the guide portion 9 is narrowed and hence stress generated in each of the first base layer 5 and the guide portion 9 during the expansion and contraction can be reduced.

Further, since the reinforcement portion 8 integrally formed with the solder layer 7 engages with the inside of the second base layer 6, it is possible to increase the package strength by an anchor effect. Furthermore, even when the reinforcement portion 8 integrally formed with the solder layer 7 engages with the inside of the first base layer 5, it is possible to increase the package strength by the anchor effect.

As described above, according to the light detector 1A, since it is possible to increase the package strength while suppressing stress generated in each member when forming the package, it is possible to suppress the package breakage.

Further, the reinforcement portion 8 integrally formed with the solder layer 7 is disposed inside the first corner portion 5a and the second corner portion 6a. For that reason, as compared with a case in which the reinforcement portion 8 is disposed in a region other than the inside of the first corner portion 5a and the second corner portion 6a in the region along the inner edges of the first base layer 5 and the second base layer 6, it is possible to suppress a decrease in opening ratio of the light transmission substrate 3 due to the reinforcement portion 8 (a ratio occupied by the region through which light is transmitted in the light transmission substrate 3 when viewed from the thickness direction of the support substrate 2) and to secure the arrangement region of the getter 11.

Further, in the light detector 1A, the plurality of light detection elements 10 are arranged in a two-dimensional matrix shape. In this configuration, as compared with a case in which one light detection element 10 is provided, the support substrate 2 and the light transmission substrate 3 increase in size and the light transmission substrate 3 is easily deformed due to a pressure difference between the inside and the outside of the accommodation space S1. For that reason, it is particularly important that the reinforcement portion 8 integrally formed with the solder layer 7 reaches the second surface 3a of the light transmission substrate 3 inside the first corner portion 5a of the first base layer 5 and the second corner portion 6a of the second base layer 6.

Further, in the light detector 1, the reinforcement portion 8 reaches the second surface 3a of the light transmission substrate 3. According to this configuration, since the joint portion between the solder layer 7 and the light transmission substrate 3 is reinforced by the reinforcement portion 8, it is possible to more reliably suppress the package breakage. Further, since the reinforcement portion 8 contacts the light detection element 10 provided on the first surface 2a, it is possible to more reliably suppress the contamination or breakage of the light detection element 10.

Further, in the light detector 1A, the first base layer 5 includes the pair of first corner portions 5a which face each other with the accommodation space S1 interposed therebetween when viewed from the thickness direction of the support substrate 2 and the second base layer 6 includes the pair of second corner portions 6a which respectively overlap the pair of first corner portions 5a when viewed from the thickness direction of the support substrate 2. Then, the reinforcement portion 8 is disposed at each of a position inside one first corner portion 5a and one second corner portion 6a overlapping each other when viewed from the thickness direction of the support substrate 2 and a position inside the other first corner portion 5a and the other second corner portion 6a overlapping each other when viewed from the thickness direction of the support substrate 2. According to this configuration, it is possible to reinforce the light transmission substrate 3 with a good balance while suppressing an increase in the number of the reinforcement portions 8.

Further, in the light detector 1A, the inner edge 8a of the reinforcement portion 8 is curved in a concave shape when viewed from the thickness direction of the support substrate 2. According to this configuration, since a range of forming the reinforcement portion 8 is controlled, it is possible to suppress a decrease in opening ratio of the light transmission substrate 3 and to suppress an individual difference in the vacuum degree of the accommodation space S1 and the reinforcement degree of the light transmission substrate 3.

Further, in the light detector 1A, the guide portion 9 is provided in the second surface 3a of the light transmission substrate 3 so as to be located between the pixel portion 4 and the first and second corner portions 5a and 6a overlapping each other when viewed from the thickness direction of the support substrate 2. Then, the wettability of the guide portion 9 with respect to the material forming the reinforcement portion 8 is higher than the wettability of the support substrate 2 and the light transmission substrate 3 with respect to the material forming the reinforcement portion 8 and the reinforcement portion 8 reaches the guide portion 9. According to this configuration, since a range of forming the reinforcement portion 8 is controlled, it is possible to suppress a decrease in opening ratio of the light transmission substrate 3 and to suppress an individual difference in the vacuum degree of the accommodation space S1 and the reinforcement degree of the light transmission substrate 3.

Further, in the light detector 1A, the light transmission substrate 3 is provided with the concave portion 3b forming a part of the accommodation space S1. According to this configuration, it is possible to increase the light transmittance of the light transmission substrate 3 by thinning a region through which light is transmitted in the light transmission substrate 3.

Further, in the light detector 1A, the first base layer 5, the second base layer 6, and the solder layer 7 overlap one another when viewed from the thickness direction of the support substrate 2. According to this configuration, it is possible to simplify a manufacturing process by patterning the first base layer 5, the second base layer 6, and the solder layer 7 in the same step.

### [Second Embodiment]

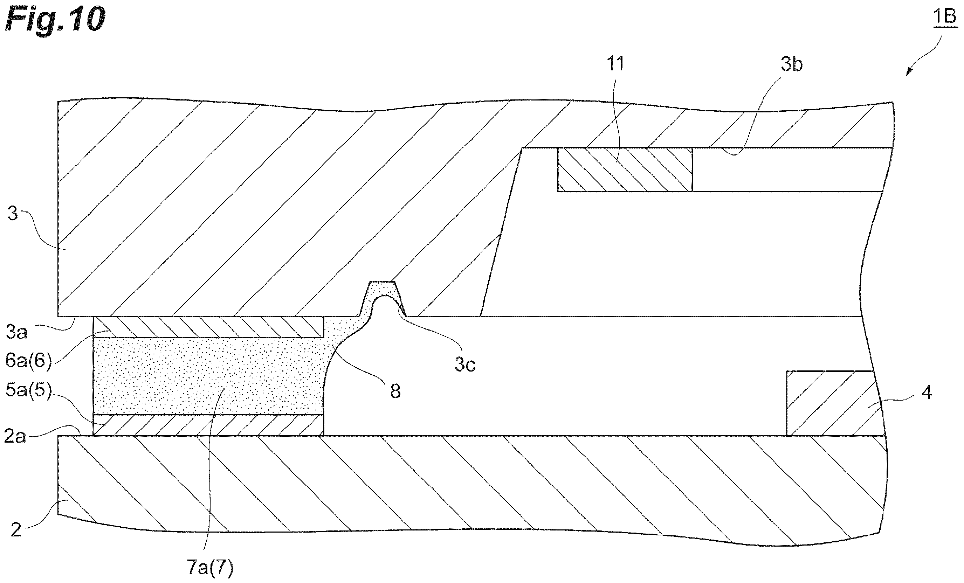

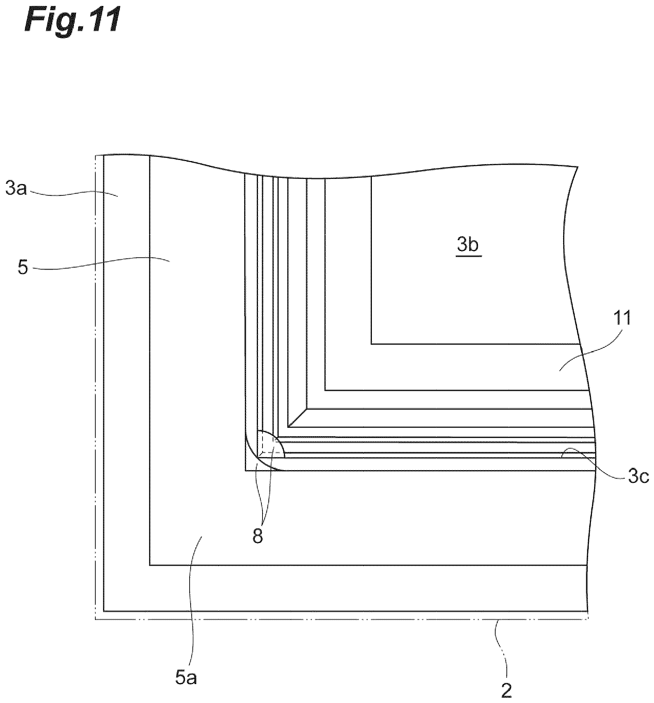

As illustrated in FIGS. 10 and 11, a light detector 1B is mainly different from the above-described light detector 1A in that the second surface 3a of the light transmission substrate 3 is not provided with the guide portion 9 and the second surface 3a of the light transmission substrate 3 is provided with a groove 3c. In the light detector 1B, the second surface 3a of the light transmission substrate 3 is provided with the groove 3c. The groove 3c is formed in a rectangular ring shape so as to pass between the pixel portion 4 and the first and second corner portions 5a and 6a overlapping each other when viewed from the thickness direction of the support substrate 2 and to pass between the pixel portion 4 and a group of the first base layer 5, the second base layer 6, and the solder layer 7. The groove 3c surrounds the concave portion 3b when viewed from the thickness direction of the support substrate 2. The width of the groove 3c is, for example, about several µm to several hundreds of µm. The depth of the groove 3c is, for example, about dozens of µm to several hundreds of µm. Further, the reinforcement portion 8 reaches the second surface 3a (contacts the second surface 3a) inside each second corner portion 6a of the second base layer 6 and stays inside the groove 3c.

In the light detector 1B with the above-described configuration, similarly to the above-described light detector 1A, the reinforcement portion 8 integrally formed with the solder layer 7 reaches the second surface 3a of the light transmission substrate 3 inside the first corner portion 5a of the first base layer 5 and the second corner portion 6a of the second base layer 6. Thus, according to the light detector 1B, it is possible to improve the light detection sensitivity and to suppress the package breakage. Furthermore, this effect is obtained when the reinforcement portion 8 reaches the second surface 3a of the light transmission substrate 3 even when the reinforcement portion 8 does not reach the inside of the groove 3c and the second surface 3a of the light transmission substrate 3 is not provided with the groove 3c.

Further, in the light detector 1B, the groove 3c is formed in the second surface 3a of the light transmission substrate 3 so as to pass between the pixel portion 4 and the first and second corner portions 5a and 6a overlapping each other when viewed from the thickness direction of the support substrate 2. According to this configuration, since a range of forming the reinforcement portion 8 is controlled, it is possible to suppress a decrease in opening ratio of the light transmission substrate 3 and to suppress an individual difference in the vacuum degree of the accommodation space S1 and the reinforcement degree of the light transmission substrate 3.

### [Third Embodiment]

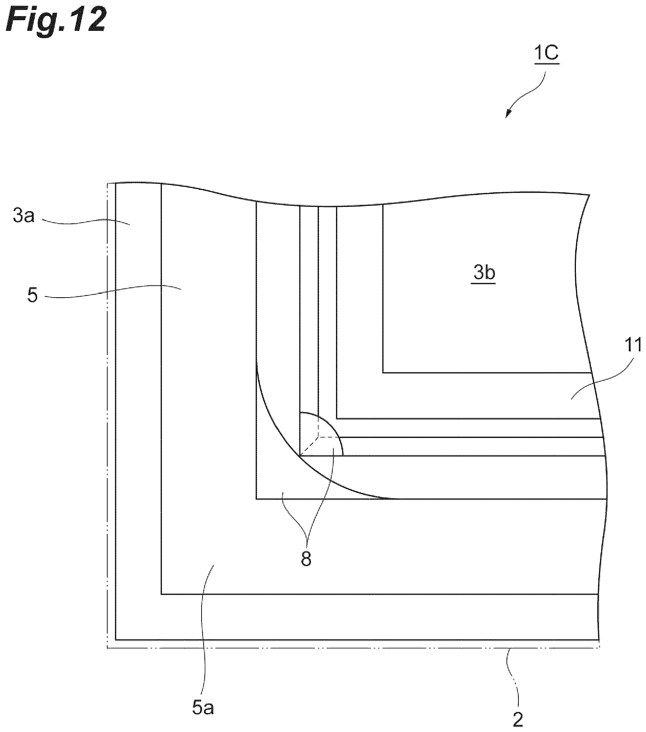

As illustrated in FIG. 12, a light detector 1C is mainly different from the above-described light detector 1A in that the second surface 3a of the light transmission substrate 3 is not provided with the guide portion 9 and the reinforcement portion 8 reaches the concave portion 3b. In the light detector 1C, the reinforcement portion 8 reaches the second surface 3a (contacts the second surface 3a) inside each second corner portion 6a of the second base layer 6 and stays in the corner of the concave portion 3b inside the concave portion 3b.

In the light detector 1C with the above-described configuration, similarly to the above-described light detector 1A, the reinforcement portion 8 integrally formed with the solder layer 7 reaches the second surface 3a of the light transmission substrate 3 inside the first corner portion 5a of the first base layer 5 and the second corner portion 6a of the second base layer 6. Thus, according to the light detector 1C, it is possible to improve the light detection sensitivity and to suppress the package breakage. Furthermore, this effect is obtained when the reinforcement portion 8 reaches the second surface 3a of the light transmission substrate 3 even when the reinforcement portion 8 does not reach the inside of the concave portion 3b and the second surface 3a of the light transmission substrate 3 is not provided with the concave portion 3b.

Further, in the light detector 1B, the reinforcement portion 8 reaches the inside of the concave portion 3b. According to this configuration, it is possible to increase the light transmittance of the light transmission substrate 3 by thinning a region through which light is transmitted in the light transmission substrate 3. Further, it is possible to reinforce a region through which light is transmitted in the light transmission substrate 3.

### [Modified Example]

Although the first, second, and third embodiments of the invention have been described above, an aspect of the invention is not limited to the above-described first, second, and third embodiments. For example, the pixel portion 4 may include one light detection element 10. Further, the first base layer 5 may include one or three or more first corner portions 5a. Similarly, the second base layer 6 may include one or three or more second corner portions 6a.

Further, the reinforcement portion 8 may reach both of the first surface 2a of the support substrate 2 and the second surface 3a of the light transmission substrate 3. According to this configuration, since the joint portion between the solder layer 7 and the light transmission substrate 3 is reinforced by the reinforcement portion 8, the package breakage can be more reliably suppressed. Further, the strength of the package including the support substrate 2 and the light transmission substrate 3 is improved by the anchor effect. For example, when a load is applied to the support substrate 2 and the light transmission substrate 3 in a direction where both substrates are separated from each other in the thickness direction of the support substrate 2, the support substrate 2 and the light transmission substrate 3 are not easily separated from each other by the anchor effect. Further, for example, when a load is applied to the support substrate 2 and the light transmission substrate 3 in a direction along the first surface 2a of the support substrate 2, the positional deviation of the support substrate 2 and the light transmission substrate 3 hardly occurs due to the anchor effect.

Furthermore, a case in which the reinforcement portion 8 reaches the first surface 2a of the support substrate 2 includes a "case in which the reinforcement portion 8 reaches a film, a layer, or the like (for example, the guide portion 9) formed on the first surface 2a inside the first corner portion 5a of the first base layer 5", a "case in which the reinforcement portion 8 reaches the first surface 2a (contacts the first surface 2a), for example, without forming a film, a layer, or the like on the first surface 2a inside the first corner portion 5a of the first base layer 5", and a "case in which the reinforcement portion 8 extends to the first surface 2a inside the first corner portion 5a of the first base layer 5".

Further, the reinforcement portion 8 may reach only the first surface 2a of the support substrate 2. According to this configuration, since a force generated when expanding the solder layer 7 is released in the corner portion 7a of the solder layer 7, a load is not easily applied to the light transmission substrate 3 of the corner portion 7a of the solder layer 7.

Further, the guide portion 9 may be provided on the first surface 2a. Specifically, the guide portion 9 is provided on the surface where at least the reinforcement portion 8 reaches in the first surface 2a and the second surface 3a.

Further, the guide portion 9 provided in the first surface 2a of the support substrate 2 may be integrally formed with the first base layer 5. At this time, the guide portion 9 may be formed as a part of the first base layer 5. Further, the guide portion 9 provided in the second surface 3a of the light transmission substrate 3 may be integrally formed with the second base layer 6. At this time, the guide portion 9 may be formed as a part of the second base layer 6. Further, the guide portion 9 may be formed so as to surround the light detection element 10 (the pixel portion 4) when viewed from the thickness direction of the support substrate 2. For example, the guide portion 9 may be formed in a ring shape so as to pass between the pixel portion 4 and the first and second corner portions 5a and 6a overlapping each other when viewed from the thickness direction of the support substrate 2 and to pass between the pixel portion 4 and a group of the first base layer 5, the second base layer 6, and the solder layer 7.

Further, the groove 3c may be formed on the first surface 2a. Specifically, the groove 3c is formed on the surface where at least the reinforcement portion 8 reaches in the first surface 2a and the second surface 3a.

Further, the groove 3c may not surround the pixel portion 4 when viewed from the thickness direction of the support substrate 2 as long as the groove is formed between the pixel portion 4 and the first and second corner portions 5a and 6a overlapping each other when viewed from the thickness direction of the support substrate 2. Further, the light detector 1B may not be provided with the groove 3c. Further, the reinforcement portion 8 may not reach the inside of the groove 3c.

Further, the inner edge of the first base layer 5 of each first corner portion 5a may be curved (smoothly curved) in a concave shape when viewed from the thickness direction of the support substrate 2. Further, the inner edge of the second base layer 6 of each second corner portion 6a may be curved (smoothly curved) in a concave shape when viewed from the thickness direction of the support substrate 2.

### Reference Signs List

1A, 1B, 1C: light detector, 2: support substrate, 2a: first surface, 3: light transmission substrate, 3a: second surface, 3b: concave portion, 3c: groove, 5: first base layer, 5a: first corner portion, 6: second base layer, 6a: second corner portion, 7: solder layer, 8: reinforcement portion, 8a: inner edge, 9: guide portion, 10: light detection element, 33: bolometer layer, S1: accommodation space.

## Claims

1. A light detector comprising:
a support substrate;
a light transmission substrate which is disposed on the support substrate and forms an accommodation space along with the support substrate;
a light detection element which is provided on the support substrate so as to be located in the accommodation space and includes a bolometer layer whose electrical resistance changes in response to heat generated when light is incident through the light transmission substrate;
a first base layer which is provided on a first surface on the side of the light transmission substrate in the support substrate so as to surround the light detection element when viewed from a thickness direction of the support substrate;
a second base layer which is provided on a second surface on the side of the support substrate in the light transmission substrate so as to surround the light detection element and overlap the first base layer when viewed from the thickness direction of the support substrate;
a solder layer which is disposed between the first base layer and the second base layer, fixes the support substrate and the light transmission substrate to each other, and air-tightly seals the accommodation space; and
a reinforcement portion which is integrally formed with the solder layer by the same material as that of the solder layer,
wherein the first base layer includes a first corner portion,
wherein the second base layer includes a second corner portion which overlaps the first corner portion when viewed from the thickness direction of the support substrate, and
wherein the reinforcement portion reaches at least one of the first surface side and the second surface side inside the first corner portion and the second corner portion overlapping each other when viewed from the thickness direction of the support substrate.

2. The light detector according to claim 1, comprising:
a plurality of the light detection elements,
wherein the plurality of light detection elements are arranged in a two-dimensional matrix shape.

3. The light detector according to claim 1 or 2,
wherein the reinforcement portion reaches at least the second surface side.

4. The light detector according to any one of claims 1 to 3,
wherein the first base layer includes a pair of the first corner portions which face each other with the accommodation space interposed therebetween when viewed from the thickness direction of the support substrate,
wherein the second base layer includes a pair of the second corner portions which respectively overlap the pair of first corner portions when viewed from the thickness direction of the support substrate, and
wherein the reinforcement portion is disposed at each of a position inside one first corner portion and one second corner portion overlapping each other when viewed from the thickness direction of the support substrate and a position inside the other first corner portion and the other second corner portion overlapping each other when viewed from the thickness direction of the support substrate.

5. The light detector according to any one of claims 1 to 4,
wherein an inner edge of the reinforcement portion is curved in a concave shape when viewed from the thickness direction of the support substrate.

6. The light detector according to any one of claims 1 to 5, further comprising:
a guide portion which is provided in at least one of the first surface and the second surface so as to be located between the light detection element and the first and second corner portions overlapping each other when viewed from the thickness direction of the support substrate,
wherein wettability of the guide portion with respect to a material forming the reinforcement portion is higher than wettability of the support substrate and the light transmission substrate with respect to the material forming the reinforcement portion, and
wherein the reinforcement portion reaches the guide portion.

7. The light detector according to any one of claims 1 to 6,
wherein a groove is formed on at least one of the first surface and the second surface so as to pass between the light detection element and the first and second corner portions overlapping each other when viewed from the thickness direction of the support substrate.

8. The light detector according to any one of claims 1 to 7,
wherein the light transmission substrate is provided with a concave portion which forms a part of the accommodation space, and
wherein the reinforcement portion reaches the inside of the concave portion.
